# EUROPEAN PATENT SPECIFICATION

(11) **EP 4 464 616 B1**
(45) Date of publication and mention of the grant of the patent: **25.02.2026**
(21) Application number: 24176190.7
(22) Date of filing: 16.05.2024
(51) Int. Cl.: B65D 8/00, B65D 13/00, B65D 6/00, B65D 77/32, B65D 43/16

(54) **CONTAINER FOR SURPRISES**
BEHÄLTER FÜR ÜBERRASCHUNG
RÉCIPIENT POUR SURPRISES

(30) Priority: 18.05.2023 IT 202300010089
(43) Date of publication of application: 20.11.2024
(73) Proprietor: SOREMARTEC S.A., 2633 Senningerberg (LU)
(72) Inventor: RICCI, Fabio, I-20154 MILANO (IT); MANSUINO, Sergio, I-12051 ALBA (Cuneo) (IT)
(74) Representative: Rambelli, Paolo

(56) References cited:
- WO-A1-02/090209
- FR-A- 822 546
- RU-C1- 2 636 300
- US-A1- 2016 001 918

## Description

The present invention relates to a container particularly intended for use as a container for gifts or surprise articles, such as toys or confectionery products, and intended to be introduced into the hollow body of a foodstuff material, such as a chocolate egg, or into a package comprising a foodstuff material.

In particular, the invention relates to a container of the type comprising two half-shells, each having a containment wall and an open mouth, which are capable of being coupled mouth-to-mouth to form a closed container.

WO2007/074355 describes a container of the aforementioned type consisting of two half-shells of a plastics material, connected therebetween, so as to form a body in one piece by means of a joint that allows the movement of one of the two half-shells with respect to the other between a closed position of the container and an open position; the container has, on one or both half-shells, weakening lines adjacent to the joint which, following stresses applied to the container, are able to rupture before the joint is ruptured. The object of this configuration is to avoid separation of the two half-shells following manipulation by the user. In effect, following the possible rupture of the weakening lines, the two half-shells remain connected therebetween by means of one or two tabs extending from the joint.

Further containers are known from RU 2 636 300 C1, FR 822 546 A, US 2016/001918 A1 and WO 02/090209 A1.

One object of the invention is to provide a configuration, for a container of the type mentioned above, that is particularly suitable for making a container out of paper material and therefore compostable and/or (bio)degradable and/or recyclable.

Another object of the invention is to provide a container made out of a paper material with an easy opening and which also maintains the features of mechanical properties, in particular a rigidity adapted to protect the products contained therein, which characterize typical containers made of a plastics material.

### Summary of the invention

In view of the aforementioned objects, the subject matter of the invention is a container having the features mentioned in the following claims.

According to the invention, the container is made of a material comprising or composed essentially of cellulose fibers; the material may comprise optional additives of the type conventionally used in the production of paper and cardboard; the material may also comprise any additives used to achieve gas and liquid barrier effects.

According to another aspect, the body of the container comprises, in the closed configuration thereof, a tear-band opening member extending along the entire perimeter contour of the body of the container lying in a plane substantially orthogonal to the plane of the mouth contour of the half-shells.

In a preferred embodiment, the tear-band opening member comprises a wall region of the first and second half-shells delimited by weakening lines which, in one embodiment, may be continuous lines or in sections with a reduced wall thickness (in relation to the adjacent wall thickness) or pre-scored.

According to the invention the first and second half-shells are connected therebetween so as to form a body in one piece, the connection being obtainable by means of a segment of the opening member.

Further features and advantages of the container according to the invention will become evident from the following detailed description, made with reference to the accompanying drawings, provided by way of non-limiting example.

### Brief description of the drawings

In the accompanying drawings:
- Fig. 1 is a sectional view of a container according to the invention;
- Fig. 2 is a perspective view of the container in Fig. 1, in a configuration in which the tear-band opening member has been partially removed;
- Fig. 3 is a perspective view showing the parts of the container following the removal of the opening member;
- Fig. 4 is a perspective view of the container in a resulting configuration following the forming thereof;
- Fig. 5 is a perspective view of a second embodiment of a container which is not part of the invention;
- Fig. 6 and 7 are perspective views showing the formations from which the container in Fig. 5 is obtained;
- Fig. 8 is a perspective view of a third embodiment of the container, adapted to increase wall rigidity, and
- Fig. 9(a), 9(b) and 9(c) are perspective views illustrating the operating sequence of molding with a mold and counter-mold of a container of the type in Fig. 1.

### Detailed description of the invention

With reference to the drawings, a container according to the invention, indicated in the entirety thereof with 1, comprises a first and a second half-shell 2,4 both formed from cellulose material, i.e., cellulose fibers that may all be of the same origin and nature or alternatively may comprise a mixture of two or more types of cellulose fibers, depending upon the desired mechanical features.

The term, used in this description, relating to the use of a material "comprising" cellulose or cellulose fibers or "composed essentially of cellulose or cellulose fibers" does not exclude the presence of optional additives, for example of the type conventionally used in the production of paper, or of additives used to obtain gas and liquid barrier effects or to improve mechanical properties. For example, such terms include the case wherein the material comprises from 70 to 99.9% by weight of cellulose fibers on an anhydrous basis, preferably from 90 to 99.9% by weight and from 0.1 to 30% by weight on an anhydrous basis of additives, preferably from 0.1 to 10% by weight.

Possible additives may include starches, alkyl ketene dimer and inert fillers.

Recycled cellulose fibers, preferably totally MOSH- and MOAH-free, may be used.

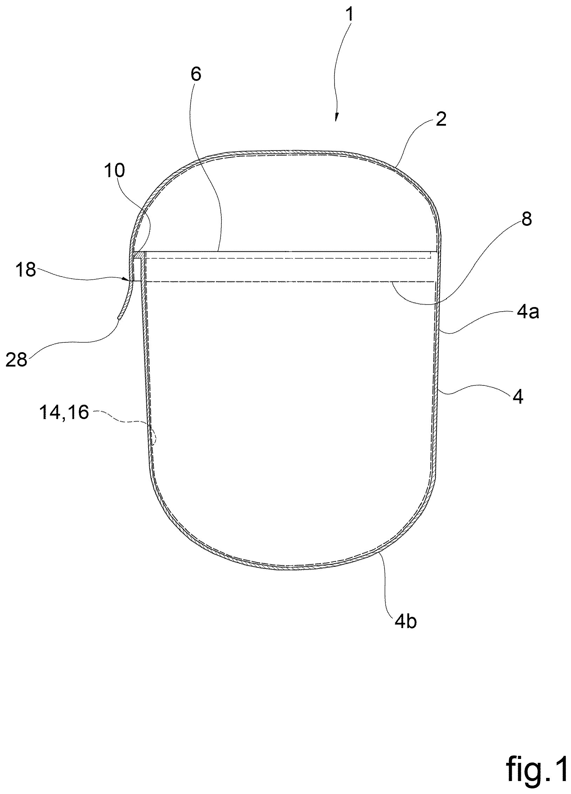

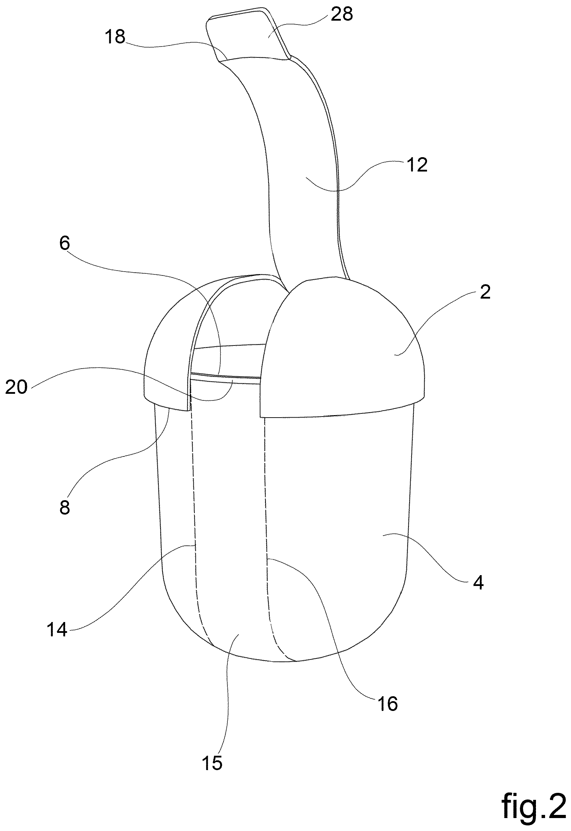

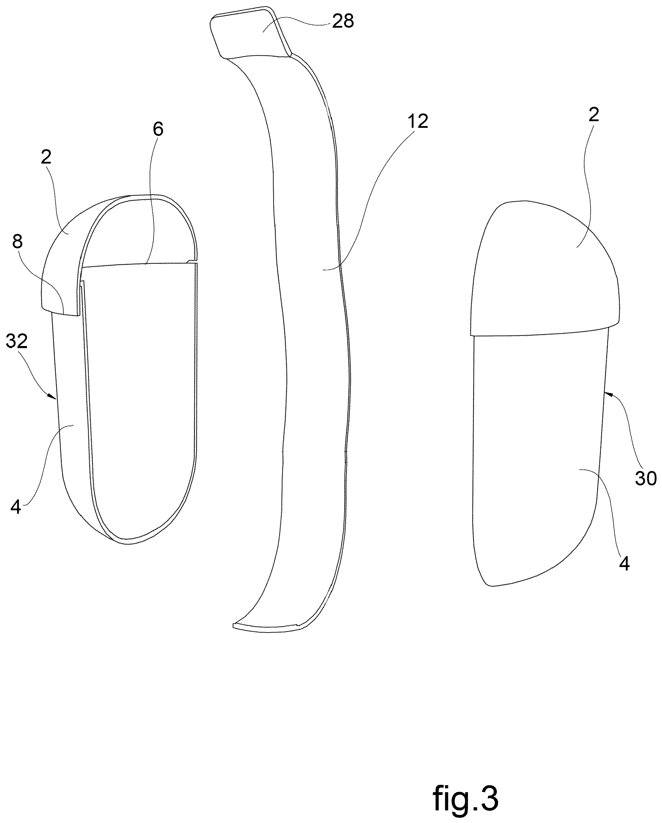

In the embodiment shown in Fig. 1 to 4, the container comprises a cup-shaped half shell 2, optionally with a flattened top, with a lid function and a half shell 4, having a greater depth than the half shell 2, having a containment function, wherein the wall thereof comprises a bottom region 4b, cup-shaped, optionally with a flattened top, and a cylindrical or slightly flared tubular shell wall region 4a. Optionally, the half-shell 2 may also have a shell-shaped tubular wall portion.

In the embodiment example, the two half-shells have a mouth, respectively 6 and 8, with a circular contour; it is however understood that the construction principle of the invention may also be applied to half-shells having a different mouth contour, for example elliptical, polygonal, ovoid or mixtilinear.

The construction principle of the invention is also applicable to containers with a general ovoid shape wherein the two half-shells have a circular mouth contour, namely an ovoid mouth contour.

In general, one of the half-shells has a greater depth and a containment function, while the other half-shell, with a shallower depth, has a lid function.

Preferably, the two half-shells may be coupled mouth-to-mouth, for example in a front coupling relationship by inserting an end wall portion of one half-shell into the end wall portion of the other half-shell.

In the example shown, the half-shell 4 with a containment function is inserted into the mouth 8 of the half-shell 2, whereby the end portions of the two half-shells, adjacent to the mouth, partially overlap.

Preferably, for the reasons more fully illustrated below, the half-shell inserted into the mouth of the other has, adjacent to the mouth thereof, a radial flange 10 extending along the entire mouth contour or possibly limited to a circumferential mouth section.

According to a feature of the invention, the container comprises a tear-band opening member 12 formed by a wall region 15 of the container, which extends along the entire perimeter contour of the body of the container lying in a plane that is preferably substantially orthogonal to the plane of the mouth contour of the half-shells. Such opening member is defined by weakening lines 14 and 16; such weakening lines may be partially pre-scored lines, either continuous or in sections, of the container wall, wherein the wall thickness of the container is reduced with respect to the thickness of the wall adjacent thereto. In particular, the tear-band opening member extends from a portion 18 of the mouth edge of one of the half-shells, in this case from the half-shell 2 acting as a lid, through the cup-shaped wall of said half-shell and then through the containment wall 4a, 4b of the other half-shell 4, to a portion 20 of the mouth edge of said other half-shell.

The aforementioned radial flange 10, or radial flange section, creates a guide for removing the opening member. Optionally, the guide for removing the opening member may be represented by a tab 28 protruding from the half-shell 2 at the section 18 of the mouth outline wherefrom the tear-band opening member 12 extends.

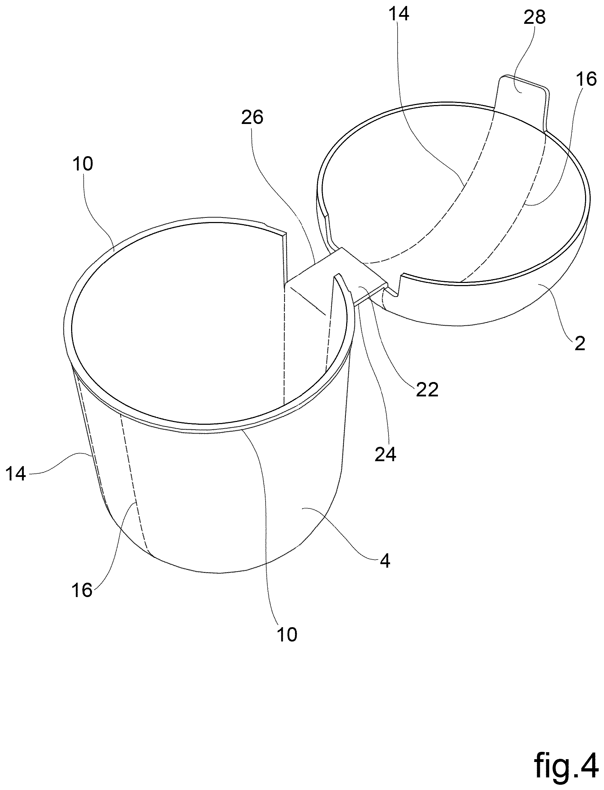

According to the invention the two half-shells 2 and 4 form a body in one piece (integral body), being hinged therebetween by a tab 22 (Fig. 4) which forms part of the opening member 12; the tab 22 is obtained during the step of molding the body into a single piece of the container, such that the edges 22 and 26 thereof are per se separated from the wall of the half-shells.

In the closed configuration of the container and, therefore, following the insertion of the contents thereinto, the two half-shells are preferably permanently connected therebetween, so as to avoid the accidental opening of the container and also so that the consumer is induced to open the container by acting upon the opening member rather than, possibly, by removing the half-shell acting as a lid or by tilting it.

The connection may be implemented by welding together wall portions of the two half-shells which, in the closed configuration, are superimposed and in contact.

The welding may be carried out by gluing, for example using a natural or synthetic glue or by applying a heat-seal lacquer in the contact regions and subsequent heating, or any other known welding methodology (for example, ultrasonic, thermal, etc.) The welding region may be limited to the contact surface of the flange 10 of one of the half-shells with the inner surface of the other half-shell.

Following the total removal of the opening member 12, the body of the container is divided into two parts 30 and 32. Each part 30 and 32 is formed from portions of the half-shells 2 and 4 that, as indicated above, have preferably been connected therebetween by welding or gluing; in the absence of a connection, it is understood that the two portions of the half-shell forming the parts 30 and 32 are separated from one another.

The removal of the opening member 12 thus allows the container to open thereby facilitating the extraction of the contents.

In a preferred embodiment, the container, in the closed configuration thereof, has a minimum size of between 20 and 200 mm; this "minimum size" in the case of a container with a circular mouth profile is to be understood to be referring to the mouth diameter.

The container, subject matter of the invention, is a rigid-walled container with such rigidity as to provide adequate protection of the contents.

The rigidity of the container is at least such that it maintains the features thereof of shape and volume when placed upon a support surface. The wall rigidity adapted to achieve adequate overall rigidity varies depending on the dimensions of the container; although the wall of the container is to be considered limitedly flexible, in the sense that it is not susceptible to breakage when subjected to bending by hand or mechanically, it has compression resistance and therefore a rigidity such that the container may be expediently used as a viable alternative to conventional containers for surprises and the like made of a plastics material, such as polypropylene and the copolymers thereof.

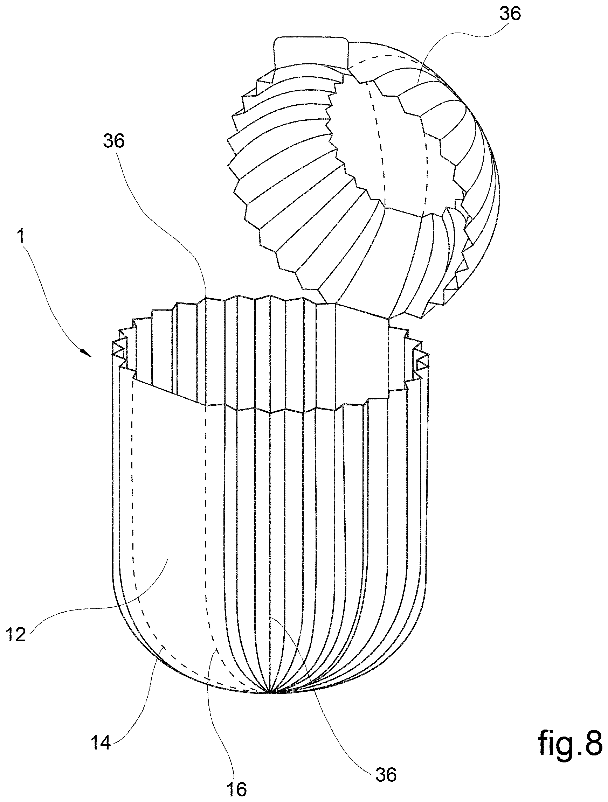

Optionally, in order to increase wall rigidity, the container may have a corrugated wall. This embodiment is shown in Fig. 8, relating to a container, of the type shown in Fig. 1, wherein the wall has a side wall provided with a plurality of corrugations 36, with a cross section, i.e. parallel to the mouth plane, that is notched. Alternatively, the outer wall of the container may be provided with a plurality of ribs or ribbings 36, projecting radially outwards and preferably with an extension orthogonal to the mouth plane. Such corrugations, ribs or ribbings may affect the entire wall of the container, with the possible exclusion of the wall region 15 defining the opening member or possibly only the tubular region of the container, previously referred to as the shell 4a.

The weakening lines, which may be obtained during the container forming step, have a reduced thickness with respect to the wall adjacent thereto, with a percentage reduction preferably on the order of 10-80%.

For example, for a container with a wall of 200 microns, weakening lines with a maximum thickness of about 100 microns may be used.

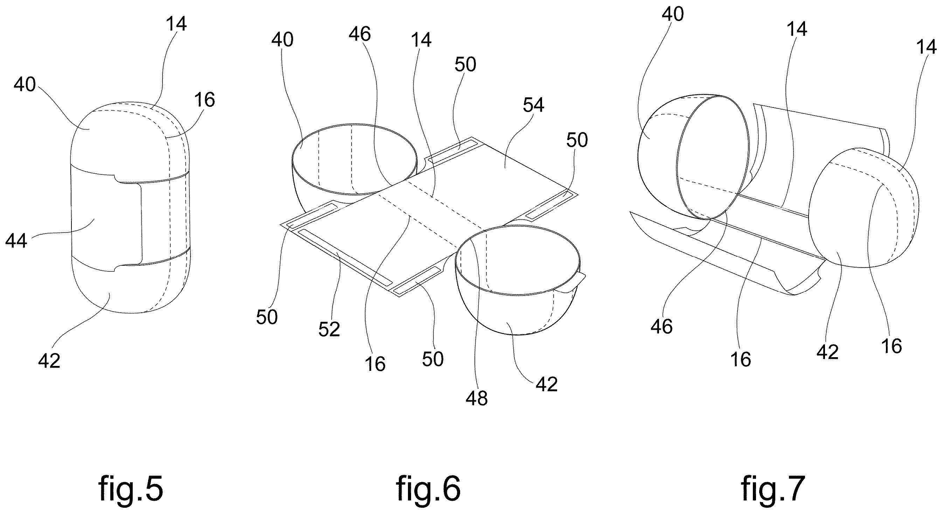

Fig. 5 shows an embodiment which is not part of the invention wherein the container 1 comprises a first and a second half-shell, 40 and 42, both cup-shaped, which are connected by film hinges to a tubular wall portion 44 (in the cylindrical example) of the container. One or both half-shells may have the function of a lid.

This container may also be made as a single-piece body, obtainable for example from a blank, wherein the formation thereof is shown in Fig. 6 and 7; the connection between the two cup-shaped half-shells and the tubular wall is made at the wall region defining the tear band, according to the hinge lines 46 and 48. The tubular wall 44, shown in a flat formation in Fig. 6, has side flaps 50 that are welded or glued to the end portions of the two half-shells adjacent to the mouth; moreover, said wall has a side edge region 52, which is welded or glued to the opposite edge 54 in order to hold said wall in a tubular configuration.

In the closed configuration of the container according to this embodiment, preferably both cup-shaped half-shells 40 and 42 are connected to the tubular wall by welding or gluing, as previously indicated.

The container, subject matter of the invention, may be obtained by conventional processes of forming cellulose articles using the wet-forming technique or the most recent forming technique that uses a dry-formed cellulose blank.

In the wet-forming process, a cellulose pulp in water is used by immersing a suction forming mold into a liquid or semi-liquid pulp suspension and then applying suction in order to form the body of the container following the deposition of the fibers onto the walls of the mold.

This technique requires a subsequent stage of drying the shaped product.

In the most recent forming technique using a dry-formed, cellulose fiber blank, the blank is inserted into a forming mold and subjected to high pressure and/or temperature.

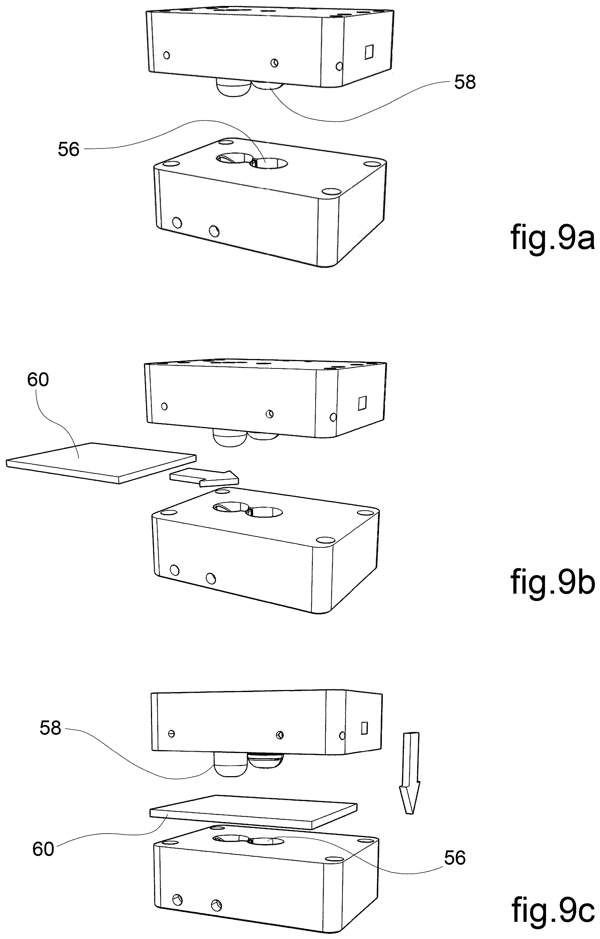

Fig. 9(a) shows, by way of example, a mold 56 and a complementary counter-mold 58 for making a container according to the invention, which conforms to the one shown in Fig. 1 to 4. The cavity of the mold 56 substantially corresponds to the configuration of the container shown in Fig. 4. The operational molding steps provide for the introduction of a blank of cellulose fibers 60 in the interposition position between the mold and the counter-mold (Fig. 9(b)) and the relative motion between the mold and the counter-mold to compress the blank inside the cavities of the mold 56 (Fig. 9(c)).

After forming, and possibly drying, if necessary in view of the method adopted, the surprise or similar accessory is introduced into the container followed by the optional welding or gluing of the two half-shells.

The invention also relates to a foodstuff package comprising a container as described above, including an amusement article or a foodstuff; such a package may, for example, be a chocolate egg.

Due to the use of a cellulose material, the container, subject matter of the invention, is compostable and/or (bio)degradable and/or recyclable and has mechanical features such that it may thus be used as a viable eco-sustainable alternative to traditional containers for surprises and the like, obtained by the molding of plastics materials.

## Claims

1. A container for products, particularly amusement articles or foodstuffs, comprising at least a first and a second half-shell (2, 4) each having a mouth contour (6, 8) and a retaining wall, capable of being coupled mouth-to-mouth to form a container in a closed configuration, wherein the container is formed from a material comprising cellulose fibers and optional additives, and comprises an opening member (12) of the container configured as a tear-band extending along the entire perimeter contour of the container lying in a plane substantially orthogonal to the plane of the mouth contour of said half-shells, **characterised in that** said first and second half-shells (2, 4) form a body in one piece, being connected therebetween by means of a tab (22) that constitutes part of the opening member.

2. Container according to claim 1, **characterized in that** said tear-band opening member (12) comprises a wall region (15) of the first and second half-shells (2, 4) delimited by weakening lines (14, 16).

3. Container according to claim 2, **characterized in that** said weakening lines (14, 16) are lines with a reduced wall thickness or are partially pre-scored, either continuously or in sections.

4. Container according to any one of claims 1 to 3, **characterized in that** said tear-band opening member (12) comprises a continuous region (15) of the container wall extending from a section (18) of the mouth contour of one of the half-shells to a section (20) of the mouth contour of the other half-shell adjacent to said first section.

5. Container according to any one of claims 1 to 4, **characterized in that** one of said half-shells (2) is configured as a lid and the other half-shell (4) is configured with a containment function, wherein the half-shell configured as a lid is superimposed on an end region of the other half-shell adjacent its mouth.

6. Container according to any one of the preceding claims having rigid walls, with a rigidity at least such that the container retains the shape and volume features thereof when placed on a supporting surface.

7. Container according to any one of the preceding claims, **characterized in that**, in the closed configuration of the container, said first and second half-shells are connected therebetween by means of welding or gluing along overlapping portions of the wall adjacent to the mouth.

8. Container according to any one of the preceding claims, **characterized in that** the wall of the container has a plurality of ribs or ribbings (36) adapted to increase the rigidity of the container.

9. Container according to any one of the preceding claims, **characterized in that** said weakening lines have a thickness reduced by 10 to 80% compared to the wall thickness of the container adjacent thereto.

10. Container according to any one of the preceding claims **characterized in that** it is obtained from a cellulose fiber material comprising from 70 to 99.9% by weight of cellulose fibers on an anhydrous basis and from 0.1 to 30% by weight of additives conventionally used in paper making or capable of achieving gas and/or liquid barrier effects and/or increasing mechanical properties.

11. Foodstuff packaging comprising a container according to any one of the preceding claims wherein an amusement article or a foodstuff is included.

## Patentansprüche

1. Behälter für Produkte, insbesondere Unterhaltungsartikel oder Lebensmittel, umfassend
mindestens eine erste und eine zweite Halbschale (2, 4), die jeweils eine Öffnungskontur (6, 8) und eine Haltewand aufweisen, die in der Lage sind, Öffnung-zu-Öffnung miteinander gekoppelt zu werden, um einen Behälter in einer geschlossenen Konfiguration zu bilden, wobei
der Behälter aus einem Material besteht, das Zellulosefasern und optionale Zusatzstoffe umfasst, und ein Öffnungselement (12) des Behälters umfasst, das als Abreißband ausgebildet ist und sich entlang der gesamten Umfangskontur des Behälters erstreckt, die in einer Ebene liegt, die im Wesentlichen orthogonal zu der Ebene der Öffnungskontur der Halbschalen liegt ,
**dadurch gekennzeichnet, dass** die erste und die zweite Halbschale (2, 4) einen einstückigen Körper bilden und mittels eines Federabschnitts (22), der einen Teil des Öffnungselements bildet, miteinander verbunden sind.

2. Behälter nach Anspruch 1, **dadurch gekennzeichnet, dass** das Abreißband-Öffnungselement (12) einen Wandbereich (15) der ersten und der zweiten Halbschale (2, 4) umfasst, der durch Schwächungslinien (14, 16) begrenzt wird.

3. Behälter nach Anspruch 2, **dadurch gekennzeichnet, dass** die Schwächungslinien (14, 16) Linien mit einer verringerten Wandstärke sind oder die teilweise, entweder durchgehend oder abschnittsweise, in voraus erhalten werden.

4. Behälter nach einem der Ansprüche 1 bis 3, **dadurch gekennzeichnet, dass** das Abreißband-Öffnungselement (12) einen kontinuierlichen Bereich (15) der Behälterwand umfasst, der sich von einem Abschnitt (18) der Öffnungskontur einer der Halbschalen zu einem Abschnitt (20) der Öffnungskontur der anderen Halbschale erstreckt, der an den ersten Abschnitt angrenzend ist.

5. Behälter nach einem der Ansprüche 1 bis 4, **dadurch gekennzeichnet, dass** eine der Halbschalen (2) als ein Deckel ausgebildet ist und die andere Halbschale (4) mit einer Aufnahmefunktion konfiguriert ist, wobei die Halbschale, die als Deckel ausgebildet wird, auf einem Endbereich der anderen Halbschale überlagert wird, der an deren Öffnung angrenzend ist.

6. Behälter nach einem der vorhergehenden Ansprüche aufweisend starre Wände, mit einer Steifigkeit mindestens sodass der Behälter seine Form- und Volumeneigenschaften hält, wenn er auf eine Stützfläche gestellt wird.

7. Behälter nach einem der vorhergehenden Ansprüche, **dadurch gekennzeichnet, dass** in der geschlossenen Konfiguration des Behälters die erste und die zweite Halbschale mittels Schweißen oder Kleben entlang überlagerten Abschnitte der Wand, die an der Öffnung angrenzend ist, miteinander verbunden sind.

8. Behälter nach einem der vorhergehenden Ansprüche, **dadurch gekennzeichnet, dass** die Wand des Behälters eine Mehrzahl von Rippen oder Nuten (36) aufweist, die eingerichtet sind, die Steifigkeit des Behälters zu erhöhen.

9. Behälter nach einem der vorhergehenden Ansprüche, **dadurch gekennzeichnet, dass** die Schwächungslinien eine Dicke aufweisen, die um 10 bis 80 % im Vergleich zu der Wanddicke des Behälters, der daran angrenzend ist, reduziert wird.

10. Behälter nach einem der vorhergehenden Ansprüche, **dadurch gekennzeichnet, dass** er aus einem Material aus Zellulosefasern, umfassend 70 bis 99,9 Gew.-% Zellulosefasern auf wasserfreier Basis und 0,1 bis 30 Gew.-% Zusatzstoffe, die üblicherweise in der Papierherstellung verwendet werden oder die in der Lage sind, Gas- und/oder Flüssigkeitsbarriere-Effekte zu erzielen und/oder mechanischen Eigenschaften zu erhöhen.

11. Lebensmittelverpackung umfassend einen Behälter nach einem der vorhergehenden Ansprüche, in der ein Unterhaltungsartikel oder ein Lebensmittel enthalten ist.

## Revendications

1. Un récipient pour produits, en particulier des articles ludiques ou des denrées alimentaires, comprenant
au moins une première et une seconde demi-coque (2, 4) ayant chacune un contour de bouche (6, 8) et une paroi de retenue, capables d'être accouplées bouche contre bouche pour former un récipient dans une configuration fermée, dans laquelle
le récipient est constitué d'un matériau comprenant des fibres cellulosiques et des additifs facultatifs, et comprend un élément d'ouverture (12) du récipient configuré comme une bande d'arrachage s'étendant sur tout le contour périphérique du récipient se trouvant dans un plan substantiellement orthogonal au plan du contour de bouche desdites demi-coques ,
**caractérisé en ce que**
lesdites première et seconde demi-coques (2, 4) forment un corps en une seule pièce, étant reliées entre elles au moyen d'une languette (22) constituant une partie de l'élément d'ouverture.

2. Récipient selon la revendication 1, **caractérisé en ce que** ledit élément d'ouverture en bande d'arrachage (12) comprend une région de paroi (15) des première et seconde demi-coques (2, 4) délimitée par des lignes d'affaiblissement (14, 16).

3. Récipient selon la revendication 2, **caractérisé en ce que** lesdites lignes d'affaiblissement (14, 16) sont des lignes à épaisseur de paroi réduite ou sont partiellement pré-incisées, soit de manière continue, soit par sections.

4. Récipient selon l'une quelconque des revendications 1 à 3, **caractérisé en ce que** ledit élément d'ouverture en bande d'arrachage (12) comprend une région continue (15) de la paroi du récipient s'étendant d'une section (18) du contour de bouche de l'une des demi-coques à une section (20) du contour de bouche de l'autre demi-coque adjacente à ladite première section.

5. Récipient selon l'une quelconque des revendications 1 à 4, **caractérisé en ce que** l'une desdites demi-coques (2) est configurée comme un couvercle et l'autre demi-coque (4) est configurée avec une fonction de contenant, la demi-coque configurée comme couvercle étant superposée à une région d'extrémité de l'autre demi-coque adjacente à sa bouche.

6. Récipient selon l'une quelconque des revendications précédentes ayant des parois rigides, avec une rigidité au moins telle que le récipient conserve ses caractéristiques de forme et de volume lorsqu'il est placé sur une surface d'appui.

7. Récipient selon l'une quelconque des revendications précédentes, **caractérisé en ce que**, dans la configuration fermée du récipient, lesdites première et seconde demi-coques sont reliées entre elles au moyen de soudage ou de collage le long de portions superposées de la paroi adjacentes à la bouche.

8. Récipient selon l'une quelconque des revendications précédentes, **caractérisé en ce que** la paroi du récipient comporte une pluralité de nervures (36) adaptées à augmenter la rigidité du récipient.

9. Récipient selon l'une quelconque des revendications précédentes, **caractérisé en ce que** lesdites lignes d'affaiblissement présentent une épaisseur réduite de 10 à 80 % par rapport à l'épaisseur de la paroi du récipient adjacente à celles-ci.

10. Récipient selon l'une quelconque des revendications précédentes, **caractérisé en ce qu'**il est obtenu à partir d'un matériau fibreux cellulosique comprenant de 70 à 99,9 % en poids de fibres cellulosiques sur une base anhydre et de 0,1 à 30 % en poids d'additifs couramment utilisés dans la fabrication du papier ou capables d'obtenir des effets barrière aux gaz et/ou aux liquides et/ou d'augmenter les propriétés mécaniques.

11. Emballage pour denrées alimentaires comprenant un récipient selon l'une quelconque des revendications précédentes dans lequel un article ludique ou une denrée alimentaire est inclus.
